# EUROPEAN PATENT APPLICATION

(11) **EP 2 282 450 A1**
(43) Date of publication of application: **09.02.2011**
(21) Application number: 09382111.4
(22) Date of filing: 13.07.2009
(51) Int. Cl.: H04L 12/28

(54) **Wireless communication apparatus for the interconnection of devices and the formation of networks based on the IEEE802.15.4/ZigBee standard.**

(71) Applicant: Tulecom Group S.L., 37188 Carbajosa de la Sagrada Salamanca (ES); Saavedra Lorenzo, Alberto, 37188 Carbajosa de la Sagrade Salamanca (ES); Nuñez Salas, Isabel Maria, 37188 Carbajosa de la Sagrada Salamanca (ES)
(72) Inventor: Tapia Martinez, Dante Israel, 37008, SALAMANCA (MX); Garcia Garcia, Oscar, 37008, SALAMANCA (ES); Alonso Rincón, Ricardo Alonso, 37008, SALAMANCA (ES); Montero Martin, Raúl, 37008, SALAMANCA (ES); Saavedra Lorenzo, Alberto, 37008, SALAMANCA (MX)

(57) **Abstract**

The *Wireless Communication Apparatus for the Interconnection of Devices and the Formation of Networks Based on the IEEE802.15.4*/*ZigBee Standard* (hereafter *Wireless Communication Apparatus*) can form wireless networks for communicating amongst them. The *Wireless Communication Apparatus* make use of the IEEE 802.15.4/ZigBee international standard, which operates in the ISM unlicensed frequency bands (868MHz in Europe, 915MHz in USA and 2.4GHz in almost all over the world). This standard presents lower power consumption than other wireless technologies as Wi-Fi, UWB, GPRS or GSM. Moreover, its cost is relatively affordable, its implementation is fast and it provides an easier deployment process than other technologies. Each of the *Wireless Communication Apparatus* consists of a set of functional hardware units, each of them with clearly-defined functionalities. The signals generated by any of these *Wireless Communication Apparatus* can be received by another *Wireless Communication Apparatus* connected to the same network, thus allowing data transmission amongst multiple *Wireless Communication Apparatus.* There are three types of *Wireless Communication Apparatus,* each one with specific characteristics and functional units.

## Description

The *Wireless Communication Apparatus for the Interconnection of Devices and the Formation of Networks Based on the IEEE802.15.4*/*ZigBee Standard* are multipurpose devices that integrate the ZigBee standard, Analog-to-Digital Converters (ADC), digital inputs and outputs and the I2C (Inter-Integrated Circuit) protocol. The *Wireless Communication Apparatus* integrate switches and indicators that facilitate their use.

Each *Wireless Communication Apparatus* is formed by a combination of the following functional hardware units:
1. **Antenna.** It is used for emitting and receiving the electromagnetic radiation through the transmission medium (i.e. the air).
2. **Wireless transceiver.** Transforms digital data into electromagnetic radiation to the antenna and vice versa. The transceiver implements the IEEE802.15.4/ZigBee standard.
3. **Microcontroller.** It is the element responsible for processing the data of the *Wireless Communication Apparatus,* both at an internal operation level and at a communication level with other devices. It communicates directly with the transceiver and integrates a USART, an I2C port, Analog-to-Digital Converters (ADC), a Serial Peripheral Interface (SPI) bus, a 1-Wire interface, and General Purpose Input/Output (GPIO) ports.
**4. USART.** The Universal Synchronous Asynchronous Receiver Transceiver (USART) is integrated in the *Wireless Communication Apparatus,* thus it allows them to communicate with third-party devices through a serial protocol.
5. **USB.** A USB (Universal Serial Bus) port is linked to the USART, allowing performing the same actions as through the USART port.
6. **Sensors.** These elements are responsible for transforming the physical measurements into data which can be processed by the microcontroller. Sensors can be connected to the microcontroller through the ADC, the I2C, the USART or the GPIO ports.
7. **Indicators.** These elements are responsible for providing both visual and acoustic information by means of LEDs (Light-Emitting Diodes), buzzers, etc.
8. **Expansion port.** It allows accessing from third-party devices to the ADC, the I2C and the GPIO ports. The I2C standard is based on a 3-wires communication using a bus topology.
9. **Power supply unit.** It provides electrical power to all the elements that are part of the *Wireless Communication Apparatus.* Its implementation is customized depending on the type of device. The types of the devices are described below.
**10. Timestamp reference.** It allows the microcontroller to retrieve an absolute time reference with down to picoseconds resolution. The absolute time reference can be useful in several applications (e.g. measuring the signal time of flight from a *Wireless Communication Apparatus* to another or calculating the processing time of some task carried out by one of them).

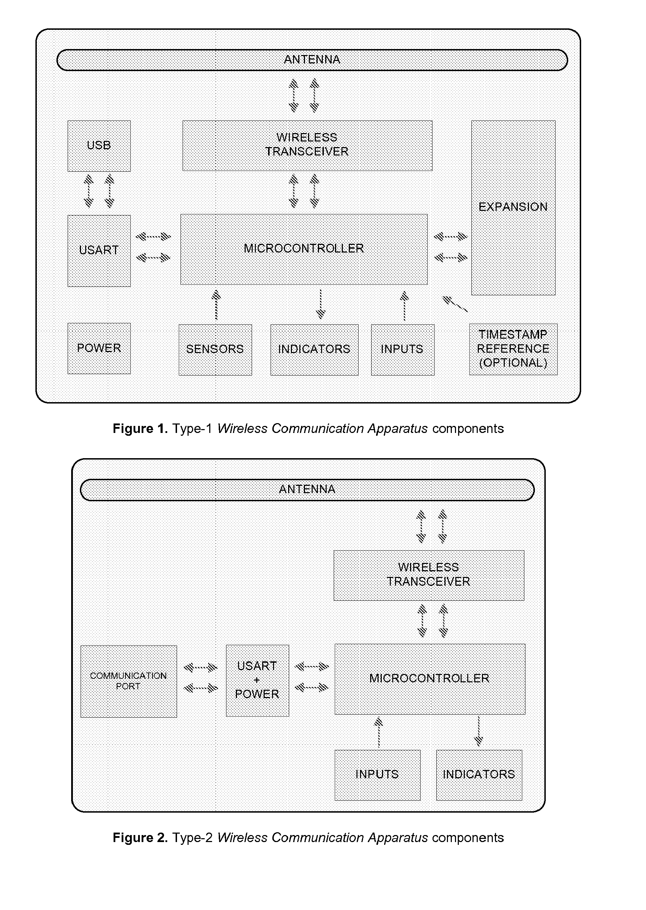

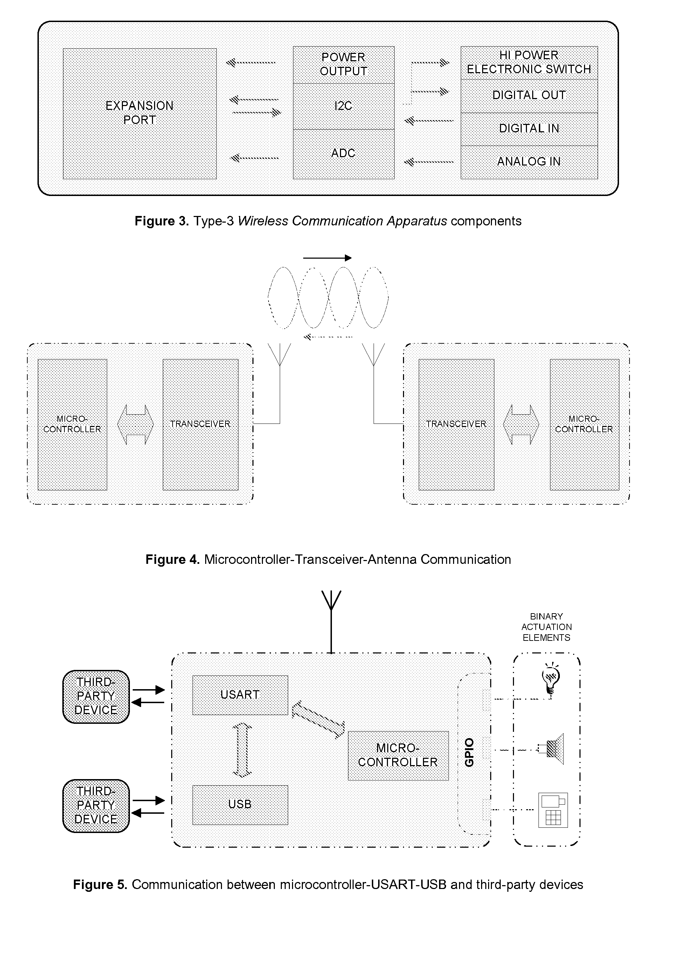

These functional hardware units constitute different types of *Wireless Communication Apparatus.* There are three types of *Wireless Communication Apparatus,* regarding the functional hardware units they implement:
**1. Type-1 *Wireless Communication Apparatus.*** As shown in Figure 1, each Type-1 *Wireless Communication Apparatus* is comprised by an antenna, a wireless transceiver, a microcontroller, a USART unit, a USB port, visual indicators, data input elements, an expansion port, a power supply and an optional timestamp reference unit.
**2. Type-2 *Wireless Communication Apparatus.*** As can be seen in Figure 2, each Type-2 *Wireless Communication Apparatus* is formed by an antenna, a wireless transceiver, a microcontroller, a USART unit, visual and acoustic indicators, data input elements and a power supply unit.
3. **Type-3 *Wireless Communication Apparatus.*** As depicted in Figure 3, each Type-3 *Wireless Communication Apparatus* is made up of an expansion port, visual indicators, data input elements, sensors and a power supply unit.

Type-1 *Wireless Communication Apparatus* implement more complete hardware than Type-2 *Wireless Communication Apparatus,* thus being able to perform additional functionalities (i.e. communication with third-party devices and sensing). The USART in Type-2 *Wireless Communication Apparatus* is implemented into a connector called Communication Port, which allows both communicating with the USART and recharging a battery connected to the Type-2 *Wireless Communication Apparatus.* Type-3 *Wireless Communication Apparatus* are used for expanding the capabilities of Type-1 *Wireless Communication Apparatus,* making use of the expansion port which both devices implement. Both Type-1 and Type-2 *Wireless Communication Apparatus* communicate amongst them making use of their wireless transceivers.

### Basic operation principles:

The data transmission amongst Type-1 and Type-2 *Wireless Communication Apparatus* is performed in a wireless way using the IEEE802.15.4/ZigBee standard. Figure 4 shows the information flux between two Type-1/Type-2 *Wireless Communication Apparatus* as an electromagnetic radiation. Such radiation is emitted/received by the antenna of the respective Type-1/Type-2 *Wireless Communication Apparatus.* The radiation is sent from the antenna to the transceiver or emitted by the transceiver through the antenna, depending on the communication direction. The data received by the antenna as an electromagnetic radiation is delivered to the transceiver. As can be seen in Figure 4, the transceiver transforms such radiation into binary data, which is sent to the microcontroller.

Figure 5 shows the data flux amongst the microcontroller, the USART, the USB port and third-party devices (i.e. electronic devices different from Type-1, Type-2 or Type-3 *Wireless Communication Apparatus*). The communication between the microcontroller and third-party devices is done either by means of the USART or utilizing a module that allows making use of the USB port through the USART. In addition, the microcontroller, through the General Purpose Input/Output (GPIO) ports, is able to generate both audible and luminous stimuli and also receive information about actions generated by the user by means of binary actuation elements (e.g. push buttons, infrared, tactile, LED, etc.).

Type-1 and Type-3 *Wireless Communication Apparatus* have an expansion port in which the power supply lines, the I2C port and the Analog-to-Digital Converters (ADC) are implemented. By means of the expansion port, a Type-3 *Wireless Communication Apparatus* can supply electrical power to a Type-1 *Wireless Communication Apparatus.* It can also establish a two-way communication with a Type-1 *Wireless Communication Apparatus* through the 12C protocol. A Type-1 *Wireless Communication Apparatus* can also make measurements from the ADC through a Type-3 *Wireless Communication Apparatus.*

Figure 3 shows a block diagram of the Type-3 *Wireless Communication Apparatus.* The "Analog In" block is a physical extension of a Type-1 *Wireless Communication Apparatus* ADC. Digital inputs and digital outputs can be accessed from a Type-1 *Wireless Communication Apparatus* using the 12C bus. External electronic devices (e.g. TV, computer, radio, etc.) can be switched on/off using the Hi-Power Electronic Switch module which isolates the rest of the components of the *Wireless Communication Apparatus* in order to avoid electric risks (e.g. electric overload).

The power supply for the *Wireless Communication Apparatus* depends on their type:
- Type-1 *Wireless Communication Apparatus* can be powered through either the USB port, the expansion port or using a special connector intended for such aim.
- Type-2 *Wireless Communication Apparatus* can be powered through either a power supply connector or by means of the Communication Port which also allows charging the battery if installed.
- Type-3 *Wireless Communication Apparatus* are powered through an external power supply.

## Claims

1. The *Wireless Communication Apparatus* allow to create wireless networks with mesh, star or tree topology.

2. The *Wireless Communication Apparatus* can be powered by means of batteries, a USB port or an external power source.

3. The Type-2 *Wireless Communication Apparatus* have a physical connector that allows them to be programmed, communicate with third-party devices and get their batteries recharged.

4. The Type-1 *Wireless Communication Apparatus* have a physical connector that allows them to communicate with devices that implement the I2C protocol. This connector also allows Type-1 *Wireless Communication Apparatus* to perform analog measurements and to be powered by third-party devices.

5. The *Wireless Communication Apparatus* can communicate with third-party devices through either the USB port or the USART port.

6. The *Wireless Communication Apparatus* can be programmed by means of the USB port or the USART port.

7. Both Type-1 and Type-3 *Wireless Communication Apparatus* can communicate with third-party devices that implement the I2C protocol.

8. The Type-3 *Wireless Communication Apparatus* can obtain analog information. Then, the Type-1 *Wireless Communication Apparatus* digitalize such information and deliver it to other *Wireless Communication Apparatus.*

9. The Type-3 *Wireless Communication Apparatus* have digital inputs/outputs that allow them to communicate with third-party devices compatible with TTL/CMOS levels.

10. The Type-3 *Wireless Communication Apparatus* can act as switches for 12V-240V AC powered loads and detect their energy consumption.

11. The *Wireless Communication Apparatus* implement sensors for making measurements of the battery charge and the power voltage.

12. The *Wireless Communication Apparatus* can communicate with a Personal Computer or other devices using either the USB port or the USART port.

13. The *Wireless Communication Apparatus* can remotely access to the digital inputs/outputs of third-party devices through the wireless network formed by the *Wireless Communication Apparatus.*

14. The *Wireless Communication Apparatus* can remotely access to the data gathered by the Analog-to-Digital Converters through the wireless network formed by the *Wireless Communication Apparatus.*

15. The Type-1 *Wireless Communication Apparatus* can make precise time measurements by means of the optional timestamp reference unit.
